# EUROPEAN PATENT SPECIFICATION

(11) **EP 1 772 358 B1**
(45) Date of publication and mention of the grant of the patent: **17.06.2009**
(21) Application number: 06076844.7
(22) Date of filing: 05.10.2006
(51) Int. Cl.: B62D 63/06, B60D 1/14

(54) **Trailer which can be coupled behind a passenger car, method for manufacturing or adapting such trailer**
Anhänger für einen Personenkraftwagen, Verfahren zur Fabrikation oder Adaptation eines derartigen Anhängers
Remorque attachable derrière une voiture, méthode pour la fabrication ou l'adaptation d'une pareille remorque

(30) Priority: 05.10.2005 NL 1030120
(43) Date of publication of application: 11.04.2007
(73) Proprietor: Holtkamp, Egbert Berend, 9561 JK Ter Apel (NL)
(72) Inventor: Holtkamp, Egbert Berend, 9561 JK Ter Apel (NL)
(74) Representative: van Loon, C.J.J.

(56) References cited:
- EP-A- 1 008 468
- NL-C2- 1 009 633
- US-A- 5 069 471
- US-A- 5 387 002

## Description

The invention relates to a trailer which can be coupled behind a passenger car, comprising a frame provided with a wheel set which supports the frame in operative condition, and a pole with a coupling element for coupling the trailer to a tow bar of a towing vehicle. The invention further relates to a method for manufacturing or adapting such trailer.

Such trailers, such as for instance a caravan or a folding trailer or a (light) trailer for transport of objects, as is often used by private persons, are therefore intended to be towed by a towing vehicle which is equipped with a tow bar with ball, as is conventional with passenger cars and similar vehicles.

During driving a combination of such a towing vehicle and such a trailer coupled to the tow bar thereof, various relative pivotal movements occur between towing vehicle and trailer. These pivotal movements are made possible due to the fact that the coupling element of the trailer can pivot with respect to the ball of the tow bar of the towing vehicle. Such pivotal movements occur when, for instance, the combination of towing vehicle and trailer takes bends or drives over a roadbed with a slope varying in the driving direction and/or transverse thereto. In order to enable such pivotal movements without the towing vehicle and the trailer thereby contacting each other in an undesired manner, the tow bar of the towing vehicle is on the rear side of the towing vehicle. The use of the pole with the trailer also contributes to the prevention of such undesired contacts during such pivotal movements.

The tow bar of the towing vehicle is also used for other purposes than towing trailers. For instance, there are supports, such as a bicycle car rack, which are specially arranged to be provided on the ball of the tow bar of an automobile. Such a bicycle car rack is, for instance, convenient for users who wish to cycle after a car ride. In addition to a caravan or folding trailer or transport trailer or the like, drivers often also have such a bicycle car rack or another support which can be fixed on the ball of a tow bar.

Such supports which are supported by the tow bar in a cantilevered manner exist in many shapes and sizes and may be intended for supporting various types of objects.

With many of such users, there is a need to take along both the trailer and the bicycle car rack with bicycles on holiday, for instance with a camping holiday by car. A drawback for such users is that, during driving with the trailer, the bicycle car rack with bicycles cannot be placed on the ball of the car tow bar because the trailer is already coupled to the car tow bar. In order to still be able to take along the bicycles and bicycle car rack, they are often, with the aid of special accessories, carried along on or in the trailer or the towing vehicle or mounted on the pole of the trailer. The spaces this takes up and the necessity of special accessories are experienced as troublesome by users.

It is an object of the invention to provide a solution according to which various types of supports which are arranged to be supported on a tow bar of a passenger car in a cantilevered manner, as well as the objects to be supported by those supports, can be transported conveniently and effectively by a combination of a towing vehicle and a trailer coupled to a tow bar of the towing vehicle.

To this end, according to the invention, a trailer of the type referred to in the introduction is characterized in that, on a side of the trailer located opposite the pole, a bar, of which an end is formed by a ball, is fixed to the trailer for supporting, in a cantilevered manner, a support of a type which can also be placed on the ball of a conventional tow bar for a car. A method for manufacturing or adapting such a trailer is, according to the invention, characterized in that such a bar provided with a ball is fixed to the trailer. Further, in a specific embodiment, the invention may be embodied in a trailer for recreational use, which is provided with a tow bar or means for fixing of a tow bar on the rear side. Further, the invention may be embodied in a kit for providing a tow bar on the rear side of a trailer.

By, in a cantilevered manner, fixing the support to the bar provided with a ball mounted on the trailer, the support and the objects to be supported thereby can be transported by the combination of the towing vehicle and the trailer coupled thereto. When the trailer is not coupled to the towing vehicle, the support can be fixed on the tow bar of the towing vehicle in a cantilevered manner. In that case, the support and the objects to be supported thereby can be transported by the towing vehicle alone. In the case of a caravan and a bicycle car rack, for instance, the bicycles do not need to be stored in the caravan or to be mounted on the pole of the caravan and no extra accessories are needed for storing and mounting bicycles and bicycle car rack. The manner of fixing the support on the ball of the trailer corresponds with the manner of fixing the support on the ball of the tow bar of the towing vehicle. So, the user does not need any extra knowledge or skills for fixing the support on the ball of the trailer.

Due to the fact that the support bar is fixed on a side of the trailer located opposite the pole and is therefore located on the rear side of the trailer, the various types of supports which are arranged for placement on a tow bar placed on the rear side of a passenger car, and objects to be supported by those supports, can be placed on the support bar of the trailer just as conveniently and effectively as on the tow bar of the passenger car. This is because both the support bar and the tow bar are on the rear side of the trailer and passenger car, respectively.

It is noted that, from US5069471A, a trailer is known in the form of a sort of caravan which can be coupled to a towing vehicle. This trailer has a chassis of which the two chassis side beams located on both sides of the chassis each extend in rearward direction of the chassis such that they are free from mutual cross connections in their rear parts. Further, from the thus formed free ends of each of these two chassis side beams, in each case, an extension side beam extends in rearward direction of the chassis. The two extension side beams are completely free from mutual cross connections. On the free ends of the extension side beams, which free ends form the rear side of the trailer, the wheel axle of an undercarriage provided with wheels for a boat can be supported. On its front side, the boat undercarriage is provided with a pole with tow bar coupling. In top plan view, on the chassis of the trailer, between the chassis side beams, a tow bar ball provided to the caravan structure is located. The tow bar coupling of the boat undercarriage can be coupled to this tow bar ball of the trailer.

Above-mentioned tow bar ball of this trailer known from US5069471A is thus at a distance from the rear side of the trailer. The distance between the tow bar ball and the rear side of the trailer is large in the sense that this distance is equal to the length of the extension side beams increased by a part of the length of the chassis side beams. This distance can also be expressed in terms of the boat undercarriage in the condition in which the boat undercarriage is supported by the (chassis side beams and the extension side beams of the) trailer. In that case, the distance between the tow bar ball and the rear side of the trailer is approximately equal to the length of the boat undercarriage, measured from the wheel axle of the boat undercarriage to the tow bar coupling of the boat undercarriage.

It is further noted that a camping compartment is known from US5387002A. The camping compartment can be placed in and on the box of a pickup truck, while it is fixed to the pickup truck by means of a number of special chain connections (chain and log binders). In US5387002A, no tow bar of the pickup truck is described or shown. In order to be able to use a camping compartment which projects relatively far with respect to the rear side of the pickup truck, an auxiliary undercarriage provided with wheels is used for the camping compartment. On the front side, the auxiliary undercarriage has a pole having a coupling element which is operatively coupled to a ball fixed to the camping compartment. The auxiliary undercarriage further has a support platform which can move sideways with respect to the bottom of the camping compartment. In this manner, maneuvering the combination of pickup truck, camping compartment and auxiliary undercarriage can be facilitated. The camping compartment has a tow bar on the rear side.

Specific embodiments of the invention are set forth in the subclaims.

In the following, the invention is explained in more detail with reference to the schematic figures in the appended drawing, in which:
Fig. 1 schematically shows, in side view, an example of an embodiment of a trailer according to the invention;
Fig. 2A schematically shows, in side view, an undercarriage of an example of another embodiment of a trailer according to the invention;
Fig. 2B schematically shows, in top plan view, an undercarriage of Fig. 2A; and
Fig. 3 schematically shows, in perspective, an example of a suspension frame of a bar to a trailer according to the invention.

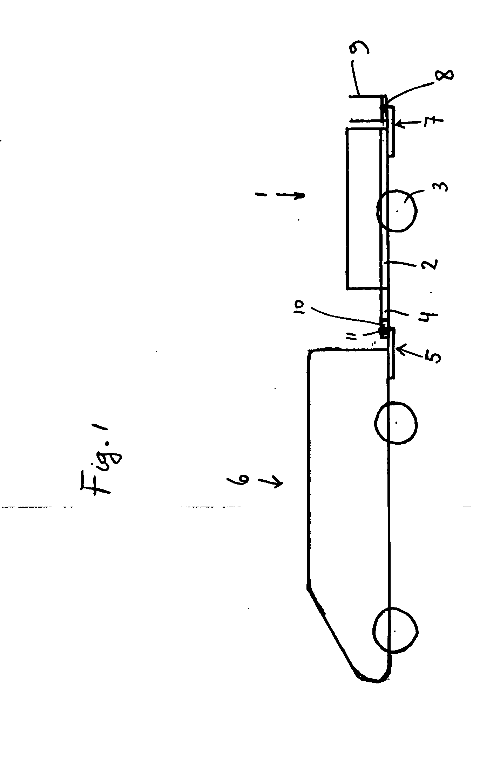

Fig. 1 shows a trailer 1 of the type which is suitable to be coupled to the tow bar of a passenger car or the like. Such a trailer may be of various types and may have various purposes of use. For instance, the trailer may be a trailer for recreational use, such as for instance a caravan or folding trailer, or a transport trailer which is provided with a loading body for transporting various types of goods. The trailer shown comprises a frame 2, a wheel set 3 connected with the frame, which supports the frame in operative condition, and a pole 4 connected to the frame in this example, which pole 4 may or may not form one whole with the frame. In the example shown, the trailer 1 is coupled to a tow bar 5 with ball 11 of a towing vehicle 6 by means of a pole 4 located on the front side of the trailer in one of the conventional manners by means of a coupling element 10.

On the rear side of the trailer 1, a bar 7 is mounted on the trailer 1. An end of the bar 7 is formed by a ball 8. In the example shown, the ball 8 supports a support 9 in a cantilevered manner. Such a support 9 may be of various types and may have various purposes of use. For instance, the support 9 may be a storage box or a bicycle car rack. But the support 9 may also comprise a closed container for transporting, for instance, tools or animals. For instance, a so-called dog container is known which can be mounted on a tow bar ball. Further, the support 9 may be a camping compartment, the support being provided with a folding construction connected with the support, which is, in folded-out condition, part of a camping accommodation, as, for instance, described in Dutch patent 1017394.

For the bar 7, various types may be used. For instance, commercially available tow bars or parts thereof may be used, which can be bought easily and at competitive prices. Such tow bars are available in many different types because they have been developed for different types of cars. Shape and (suspension) frame of the commercially available tow bars depend on bottom plate, fixing points, bumper and the like of the car, but also, for instance, on the desired tractive effort. A tow bar is often formed from one bar, the tow bar ball being formed first and the bar then being bent and rolled. There are fixed tow bars, but also detachable systems, which are fixed with, for instance, bolts and nuts or with a click mechanism. Further, there are fully automatic systems with rotary knob, where the tow bar can be uncoupled with a simple turn of the rotary knob. Also, tow bars are known which can be folded under the car with the aid of an electrical system.

During towing operation, generally, very great forces are exerted on tow bars for towing vehicles. An all-terrain vehicle, for instance, needs to be able to tow up to 3500 kilograms. In supporting operation, such great forces will usually not be exerted on the bar 7 with ball 8 mounted on the trailer according to the invention. Therefore, depending on the load to be supported by the support 9, usually a simple and inexpensive bar 7 with ball 8 can be used, for instance a tow bar for a small passenger car. Also, the suspension frame for suspending the bar 7 from the trailer needs to have a less strong design than is usual with suspension frames of tow bars for towing vehicles.

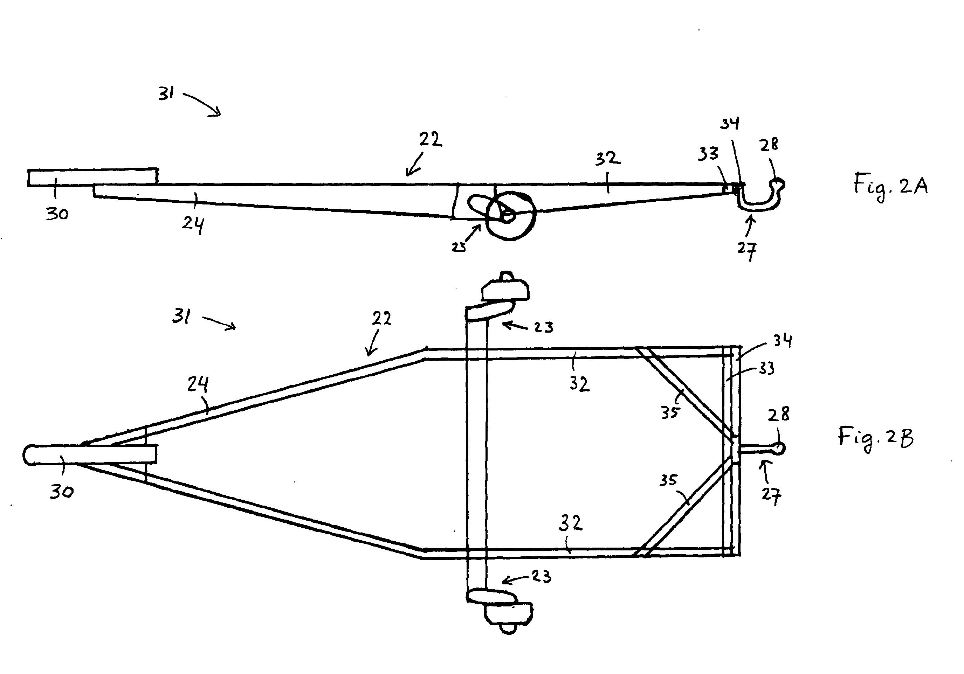

Reference is now made to Figs. 2A and 2B. These Figures show an undercarriage 31 of a trailer according to the invention. The undercarriage comprises a frame 22 of the trailer, a wheel suspension 23 connected with the frame 22, which supports the frame, in operative condition, in combination with wheels not shown in this Figure, and a pole 24 connected to the frame with a coupling element 30 for coupling the trailer to a tow bar of a towing vehicle. On the side of the trailer located opposite the pole 24, a bar 27 is fixed to the trailer. The free end of the bar 27 is formed by a ball 28 in a similar manner as is the case with conventional tow bars for (passenger) cars. By the ball 28, a support, such as the support 9 of the example shown in Fig. 1, can be supported.

On the whole, the undercarriage shown approximately corresponds with the conventionally used undercarriages of caravans. Thus, the frame 22 has two longitudinal beams 32 on both sides which run parallel to each other at the rear part of the undercarriage. In the top plan view of Fig. 2B, the longitudinal beams taper towards each other, viewed in the direction of the front side of the undercarriage. In the area where the tapering ends of the longitudinal beams 32 meet, they form the pole 24. On the rear side of the undercarriage, a cross beam 33 forms a cross connection for the two longitudinal beams 32. The cross beam may have any suitable open or closed cross section.

When fixing the bar 27 to such a configuration of the two longitudinal beams 32 and the rear cross beam 33, the bar 27 can be fixed to the cross beam 33. Fixing can take place in one of the manners conventional for tow bars, for instance with the aid of welding and/or bolts and/or utilizing tow bar supports and/or plate parts, or the like. It is noted that, if the frame comprises no cross beam or an insufficiently strong cross beam, it may also be provided as part of the fixing construction for the bar 27 if necessary. For reinforcing the construction, for instance, two shores, such as the two shores 35 shown, may be provided between the longitudinal beams 32 and the cross beam 33. Also, the cross beam 33 may have a stronger than normal design, or it may be reinforced by, for instance, mounting an angle section in longitudinal direction of the cross beam 33 against or next to the cross beam. By way of example, in Figs. 2A and 2B, such an angle section 34 is shown. The bar may also be fixed to such an angle section.

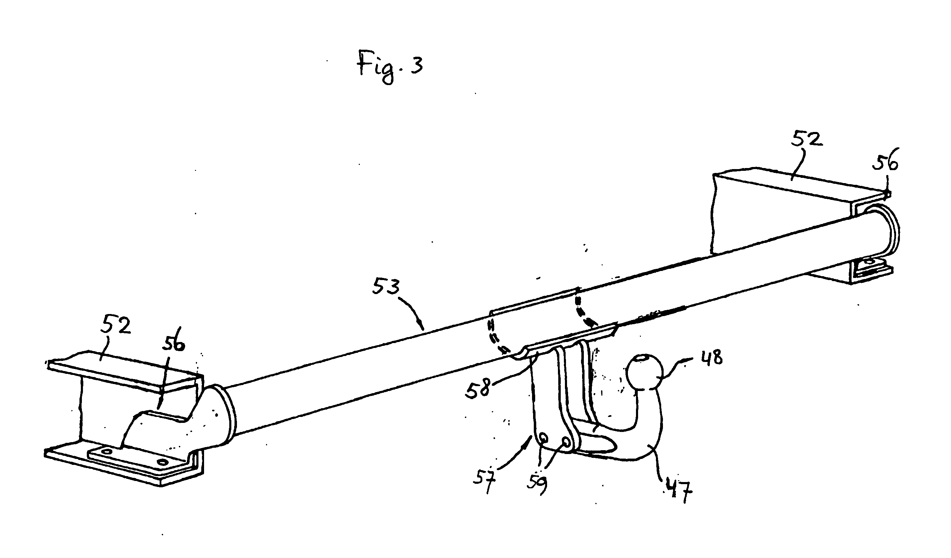

Fig. 3 shows a further example of how a bar may be suspended from a trailer. The rear ends of two longitudinal beams 52 of an undercarriage of a trailer are shown. By means of two fixing supports 56, an, in this example, tubular cross beam 53 is fixed to the rear ends of the two longitudinal beams 52. To the cross beam 53, a reinforcing shell 58 is welded. To the reinforcing shell 58, a tow bar support 57 is welded, which tow bar support projects transversely with respect to the cross beam 53. The tow bar support 57 is provided with tow bar fixing means 59 to which a tow bar 47 is fixed such that the tow bar ball 48 of the tow bar 47 is at a distance from the cross beam 53. A type of suspension frame for a bar similar to the type shown in Fig. 3 is known from NL1009633C2 as a frame for suspending a tow bar from the chassis of a towing vehicle.

It is noted that the above-mentioned examples of embodiments do not limit the invention and that various alternatives are possible within the scope of the appended claims. For instance, instead of to the frame or to a cross beam of the trailer, the bar, such as the bar 7, 27 or 47, may also have been or be fixed to other parts of the trailer, for instance to a housing part of the trailer. Also, the bar may have been or be provided together with various accessories for the bar, such as for instance cable work, multiple sockets and the like. Further, on the bar, supports may be used, which are supported by the ball of the support bar and are also, in a known manner, provided with means, which are supported by another part of the support bar. It is further noted that trailers for recreational use are also understood to include, in addition to folding trailers and caravans, for instance boat trailers, luggage trailers, etc. In the framework of this invention, passenger cars are also understood to include other types of cars which are usually provided with a tow bar with ball, such as vans, minivans, etc. The invention can be used with all trailers which are suitable to be coupled behind a car with a conventional tow bar, i.e. a tow bar provided with a ball. In addition to the trailers for recreational use already mentioned, this also includes, for instance, hobby trailers for private use and small business use. The invention further comprises a trailer which is prepared for mounting a tow bar, for instance by adaptation of the frame and/or by adapting the electrical wiring and the like. The adaptation of the frame may vary from rough-boring fixing holes to actually providing brackets and/or reinforcements, cross beams, etc., to which only a ball needs to be fixed.

## Claims

1. A trailer which can be coupled behind a passenger car, comprising a frame (2; 22) provided with a wheel set (3; 23) which supports the frame in operative condition, and, arranged at a front end of the trailer, a pole (4; 24) with a coupling element (10; 30) for pivotably coupling the trailer (1) to a tow bar (5) of a towing vehicle (6), **characterized in that**, at the rear of the trailer (1), a bar (7; 27; 47) is fixed, of which an end is formed by a ball (8; 28; 48) for, in a cantilevered manner, supporting a support (9) of a type which can also be placed on the ball (11) of a conventional tow bar (5) for a car.

2. A trailer according to claim 1, wherein, as a bar (7; 27; 47), a conventional tow bar or a part thereof is used.

3. A trailer according to claim 1 or 2, wherein the bar (27; 47) is fixed to a cross beam (33; 53) provided on the rear side of the trailer.

4. A trailer according to claim 3, wherein the cross beam is a cross beam which is part of the frame.

5. A trailer according to any one of claims 1-4, wherein the trailer is a trailer for recreational use.

6. A method for manufacturing or adapting a trailer (1) which can be coupled behind a passenger car, comprising a frame (2; 22) provided with a wheel set (3; 23) which supports the frame in operative condition, and, arranged at a front end, a pole (4; 24) with a coupling element (10; 30) for pivotably coupling the trailer (1) to a tow bar (5) of a towing vehicle (6), **characterized in that**, at the rear of the trailer (1), a bar (7; 27, 47) is fixed, of which an end is formed by a ball (8; 28; 48) for, in a cantilevered manner, supporting a support (9) of a type which can also be placed on the ball (11) of a conventional tow bar (5) for a car.

7. A method according to claim 6, wherein the bar (27; 47) is fixed to a cross beam (33; 53) located on the rear side of the trailer.

8. A method according to claim 7, wherein the cross beam is part of the frame.

9. A method according to claim 6, 7 or 8, wherein the cross beam (33) has been or is connected with longitudinal beams (32) of the frame and the connections between the cross beam (33) and the longitudinal beams (32) are reinforced by providing shores (35) between the cross beam (33) and the longitudinal beams (32).

## Patentansprüche

1. Anhänger, der hinter einen Personenkraftwagen gekoppelt werden kann, der einen Rahmen (2; 22), der mit einem Radsatz (3; 23) versehen ist, der den Rahmen in einem betriebsfähigen Zustand trägt, und eine an einem vorderen Einde des Anhängers angeordnete Deichsel (4; 24) mit einem Kopplungselement (10; 30) zum drehbaren Koppeln des Anhängers (1) mit einer Anhängerkupplung (5) einer Zugmaschine (6) aufweist, **dadurch gekennzeichnet, daß** an der Rückseite des Anhängers (1) eine Stange (7; 27; 47) befestigt ist, von der ein Ende durch eine Kugel (8; 28; 48) gebildet wird, um in einer Auslegerweise einen Halter (9) einer Art zu halten, die auch auf der Kugel (11) einer herkömmlichen Anhängerkupplung (5) für einen Kraftwagen angeordnet werden kann.

2. Anhänger nach Anspruch 1, wobei als Stange (7; 27; 47) eine herkömmliche Anhängerkupplung oder ein Teil davon verwendet wird.

3. Anhänger nach Anspruch 1 oder 2, wobei die Stange (27; 47) an einer Querstrebe (33; 53) befestigt ist, die an der Rückseite des Anhängers vorgesehen ist.

4. Anhänger nach Anspruch 3, wobei die Querstrebe eine Querstrebe ist, die Teil des Rahmens ist.

5. Anhänger nach einem der Ansprüche 1-4, wobei der Anhänger ein Anhänger zur Freizeitverwendung ist.

6. Verfahren zum Herstellen oder Einrichten eines Anhängers (1), der hinter einen Personenkraftwagen gekoppelt werden kann, der einen Rahmen (2; 22), der mit einem Radsatz (3; 23) versehen ist, der den Rahmen in einem betriebsfähigen Zustand trägt, und eine an einem vorderen Ende des Anhängers angeordnete Deichsel (4; 24) mit einem Kopplungselement (10; 30) zum drehbaren Koppeln des Anhängers (1) mit einer Anhängerkupplung (5) einer Zugmaschine (6) aufweist, **dadurch gekennzeichnet, daß** an der Rückseite des Anhängers (1) eine Stange (7; 27, 47) befestigt wird, von der ein Ende durch eine Kugel (8; 28; 48) gebildet wird, um in einer Auslegerweise einen Halter (9) einer Art zu halten, die auch auf der Kugel (11) einer herkömmlichen Anhängerkupplung (5) für einen Kraftwagen angeordnet werden kann.

7. Verfahren nach Anspruch 6, wobei die Stange (27; 47) an einer Querstrebe (33; 53) befestigt wird, die sich auf der Rückseite des Anhängers befindet.

8. Verfahren nach Anspruch 7, wobei die Querstrebe Teil des Rahmens ist.

9. Verfahren nach Anspruch 6, 7 oder 8, wobei die Querstrebe (33) mit Längsstreben (32) des Rahmens verbunden worden ist oder wird und die Verbindungen zwischen der Querstrebe (33) und den Längsstreben (32) verstärkt werden, indem Versteifungen (35) zwischen der Querstrebe (33) und den Längsstreben (32) vorgesehen werden.

## Revendications

1. Remorque attachable derrière une voiture, comprenant un cadre (2 ; 22) équipé d'un train de roues (3 ; 23) qui supporte le cadre en fonctionnement, et, agencée à une extrémité avant de la remorque, un bras (4 ; 24) avec un élément d'accouplement (10; 30) pour accoupler avec capacité de pivotement la remorque (1) à une barre de remorquage (5) d'un véhicule tracteur (6), **caractérisée en ce qu'**à l'arrière de la remorque (1) est fixée une barre (7 ; 27 ; 47) dont une extrémité est formée par une boule (8 ; 28 ; 48) destinée à supporter, en porte-à-faux, un support (9) d'un type pouvant également être placé sur la boule (11) d'une barre classique (5) de remorquage d'une voiture.

2. Remorque selon la revendication 1, **caractérisé en ce que** la barre (7; 27 ; 47) employée consiste en une barre de remorquage classique ou une partie de celle-ci.

3. Remorque selon la revendication 1 ou la revendication 2, **caractérisée en ce que** la barre (27 ; 47) est fixée à une traverse (33 ; 53) prévue à l'arrière de la remorque.

4. Remorque selon la revendication 3, **caractérisée en ce que** la traverse fait partie du cadre.

5. Remorque selon l'une quelconque des revendications 1 à 4, **caractérisée en ce qu'**il s'agit d'une remorque de loisirs.

6. Méthode pour la fabrication ou l'adaptation d'une remorque (1) attachable à l'arrière d'une voiture, comprenant un cadre (2 ; 22) équipé d'un train de roues (3 ; 23) qui supporte le cadre en fonctionnement, et, agencé à une extrémité avant de la remorque, un bras (4 ; 24) avec un élément d'accouplement ( 10 ; 30) pour accoupler avec capacité de pivotement la remorque (1) à une barre de remorquage (5) d'un véhicule tracteur (6), **caractérisée en ce qu'**à l'arrière de la remorque (1) est fixée une barre (7 ; 27 ; 47) dont une extrémité est formée par une boule (8 ; 28 ; 48) destinée à supporter, en porte-à-faux, un support (9) d'un type pouvant également être placé sur la boule (11) d'une barre classique (5) de remorquage d'une voiture.

7. Méthode selon la revendication 6, **caractérisée en ce que** la barre (27 ; 47) est fixée à une traverse (33 ; 53) située à l'arrière de la remorque.

8. Méthode selon la revendication 7, **caractérisée en ce que** la traverse fait partie du cadre.

9. Méthode selon la revendication 6, 7 ou 8, **caractérisée en ce que** la traverse (33) a été ou est raccordée à des longerons (32) du cadre et **en ce que** les raccordements entre la traverse (33) et les longerons (32) sont renforcés par des bras de renfort (35) agencés entre la traverse (33) et les longerons (32).
